# EUROPÄISCHE PATENTSCHRIFT

(11) **EP 3 513 021 B1**
(45) Veröffentlichungstag und Bekanntmachung des Hinweises auf die Patenterteilung: **05.05.2021**
(21) Anmeldenummer: 17758426.5
(22) Anmeldetag: 01.08.2017
(51) Int. Cl.: E05B 83/24, E05C 19/00

(54) **KRAFTFAHRZEUGTÜRSCHLOSS**
MOTOR VEHICLE DOOR LOCK
SERRURE D'OUVRANT DE VÉHICULE AUTOMOBILE

(30) Priorität: 14.09.2016 DE 102016117281
(43) Veröffentlichungstag der Anmeldung: 24.07.2019
(73) Patentinhaber: Kiekert AG, 42579 Heiligenhaus (DE)
(72) Erfinder: STURM, Christian, 47804 Krefeld (DE); DROST, Bernhard, 46419 Isselburg (DE); SCHOLZ, Michael, 45136 Essen (DE); SCHIFFER, Holger, 40668 Meerbusch (DE)
(86) Internationale Anmeldenummer: PCT/DE2017/100647
(87) Internationale Veröffentlichungsnummer: WO 2018/050148

(56) Entgegenhaltungen:
- CN-A- 105 927 066
- DE-A1-102007 008 700
- DE-A1-102012 212 542
- DE-A1-102014 018 068
- DE-T2- 60 109 379

## Beschreibung

Die Erfindung betrifft ein Kraftfahrzeugtürschloss, insbesondere Kraftfahrzeug-Fronthaubenschloss, mit einem Gesperre aus im Wesentlichen Drehfalle und Sperrklinke, wobei die Drehfalle eine Vorrast und eine Hauptrast aufweist und wobei in einer Vorraststellung die Sperrklinke in die Vorrast der Drehfalle eingefallen ist, wobei das Gesperre mit einem Schließbolzen bzw. Schlosshalterbügel an einer Haube wechselwirkt, und mit einer Entriegelungs-/Öffnungseinrichtung für die Haube, welche mit einer im Innern einer Kraftfahrzeugkarosserie vorgesehenen Handhabe ausgerüstet ist, wobei vorzugsweise eine zweimalige Betätigung der Handhabe zum Öffnen der Haube erforderlich ist und wobei das Gesperre nach einmaliger Betätigung der Handhabe eine Vorraststellung mit nach wie vor gefangenem Schließbolzen bzw. Schlosshalterbügel einnimmt. Das Dokument DE 10 2007 008700 A1 offenbart ein solches Kraftfahrzeugtürschloss.

Kraftfahrzeugtürschlösser und insbesondere Kraftfahrzeug-Fronthaubenschlösser, wie sie in großer Zahl in der Praxis eingesetzt werden, verfügen in der Regel neben dem Gesperre aus der Drehfalle und der Sperrklinke zusätzlich noch über einen Fanghaken. Man spricht aus diesem Grund auch von sogenannten Fanghakenschlössern, wie sie in der DE 199 38 687 B4 im Detail beschrieben werden. In geschlossenem Zustand der Haube und folglich des Gesperres sorgt neben dem Gesperre der Fanghaken dafür, dass der Schließbolzen gesichert ist. Dadurch wird eine gleichsam zweifache Sicherung zur Verfügung gestellt.

Zum Öffnen eines solchen Kraftfahrzeugtürschlosses ist eine zumindest einmalige Betätigung der Handhabe der Entriegelungs-/Öffnungseinrichtung erforderlich. Die Handhabe kann dazu als Schlaufe im Innern der Kraftfahrzeugkarosserie vorgesehen sein. An die Handhabe mag ein Bowdenzug als Verbindungselement angeschlossen sein, so dass bei einer Beaufschlagung der Handhabe die Sperrklinke von ihrem Eingriff mit der Drehfalle abgehoben wird. Obwohl das Gesperre hierdurch geöffnet ist, wird der Schließbolzen nach wie vor mit Hilfe des Fanghakens gesichert. Zum Öffnen der Haube ist es folglich erforderlich, dass ein Bediener das Kraftfahrzeug verlässt und durch einen sich bei geöffnetem Gesperre einstellenden Schlitz zwischen der Haube und der Kraftfahrzeugkarosserie hindurch den Fanghaken verschwenkt, so dass anschließend der Schließbolzen bzw. Schlosshalterbügel freikommt und die Haube geöffnet werden kann. Eine solche Vorgehensweise wird zunehmend aus Komfortgründen kritisiert.

Aus diesem Grund schlägt die gattungsbildende DE 10 2012 212 542 A1 ein Kraftfahrzeugtürschloss vor, bei dem eine erste und zweite Motorhaubenverriegelung vorgesehen sind. Mit Hilfe der Handhabe im Innern der Kraftfahrzeugkarosserie wird zunächst die erste Motorhaubenverriegelung mit der ersten Betätigung der Handhabe und dann die zweite Motorhaubenverriegelung mit der zweiten Betätigung der Handhabe entriegelt. Das geschieht jeweils vom Innern des Kraftfahrzeuges her und ist aus diesem Grund besonders komfortabel.
Allerdings besteht beim Stand der Technik das Problem, dass der Bediener die Handhabe wie beschrieben zweimal beaufschlagt, was zum Öffnen der Haube erforderlich ist. Falls dieses Öffnen der Haube nicht erfolgt, kann der Bediener mit dem Kraftfahrzeug dennoch losfahren. Das führt im schlimmsten Fall dazu, dass die Haube unkontrolliert aufschwenkt und schlagartig die Sicht nach vorne verdeckt, was ein erhebliches Sicherheitsrisiko darstellt. Hier will die Erfindung insgesamt Abhilfe schaffen.

Der Erfindung liegt das technische Problem zugrunde, ein derartiges Kraftfahrzeugtürschloss so weiter zu entwickeln, dass bei konstruktiv einfachem Aufbau die Sicherheit gesteigert ist.

Zur Lösung dieser technischen Problemstellung ist ein gattungsgemäßes Kraftfahrzeugtürschloss im Rahmen der Erfindung dadurch gekennzeichnet, dass die Haube aus der Vorraststellung heraus durch eine Bewegung in ihrer Längsrichtung geöffnet wird, die dazu korrespondiert, dass die Sperrklinke von einer Vorrast an der Drehfalle mit Hilfe einer Kontur an der Haube abgehoben wird.

Die Bewegung der Haube in ihrer Längsrichtung zum Öffnen aus der Vorraststellung heraus korrespondiert dazu, dass die Sperrklinke des Gesperres im Innern des Kraftfahrzeugtürschlosses von ihrer Vorrast an der Drehfalle abgehoben wird. Das ist im Detail so umgesetzt, dass eine Kontur an der Haube mit der Sperrklinke wechselwirkt. Durch die Bewegung der Haube in ihrer Längsrichtung im Sinne der beschriebenen drückenden oder ziehenden Beaufschlagung seitens eines Bedieners kommt die fragliche Kontur an oder im Innern der Haube in Eingriff mit der Sperrklinke und sorgt dafür, dass diese von der Vorrast an der Drehfalle abgehoben wird. Jetzt ist das Gesperre geöffnet und kann die Haube wunschgemäß geöffnet werden. Die Sperrklinke fährt bei geöffneter Haube in ihre Ausgangsstellung federbeaufschlagt zurück, so dass bei einem anschließenden Schließvorgang der Haube die Sperrklinke unmittelbar zunächst in die Vorrast und dann in die Hauptrast der Drehfalle einfallen kann. Es ist also die übliche Funktionalität beim Schließen der Haube gegeben.

Auf diese Weise ist im Rahmen der Erfindung sichergestellt, dass eine einmalige oder vorzugsweise auch zweimalige Betätigung der Handhabe immer dazu führt oder darin mündet, dass das Gesperre des Kraftfahrzeugtürschlosses eine Vorraststellung einnimmt. In dieser Vorraststellung ist die Sperrklinke in eine Vorrast der Drehfalle eingefallen. Der Schließbolzen bzw. Schlosshalterbügel wird nach wie vor gefangen. Das hat zur Folge, dass selbst in einem solchen Fall das Kraftfahrzeug grundsätzlich bewegt werden kann, ohne dass mit Beeinträchtigungen der Sicherheit zu rechnen ist. Dabei versteht es sich, dass die Einnahme der Vorraststellung zusätzlich mit Hilfe eines Sensors oder Schalters abgefragt werden kann. Das entsprechende Sensor- oder Schaltersignal lässt sich nun seinerseits im Innern des Kraftfahrzeuges optisch und/oder akustisch angeben. Grundsätzlich kann aus dem fraglichen Signal aber auch ein Signal für eine Steuereinheit des Kraftfahrzeuges abgeleitet werden, welches ein Losfahren verhindert. Jedenfalls gelingt es im Rahmen der Erfindung, die Sicherheit ausdrücklich zu steigern und ist es einem Fahrzeugführer zwar grundsätzlich möglich, das Fahrzeug zu bewegen, wird die Haube und insbesondere Fronthaube jedoch nach wie vor einwandfrei gesichert.

Bei der Haube kann es sich grundsätzlich um jedwedes Klappenelement an oder in einer Kraftfahrzeugkarosserie handeln. Hierunter fallen auch Kraftfahrzeugtüren, eine Heckklappe, ein Deckel, eine Tankklappe etc.. D. h., das erfindungsgemäße Kraftfahrzeugtürschloss kommt nicht ausschließlich zur Sicherung einer Fronthaube und folglich als Kraftfahrzeug-Fronthaubenschloss zum Einsatz, wenngleich eine solche Vorgehensweise bevorzugt ist.

Um nun die Haube ausgehend von der Vorraststellung zu Öffnen, wird die Haube von einem Bediener drückend oder ziehend in der Längsrichtung beaufschlagt. Dabei korrespondiert die genannte Bewegung der Haube in ihrer Längsrichtung im Allgemeinen zu einer Bewegung in Fahrzeuglängs- bzw. X-Richtung. Tatsächlich wird die Fahrzeuglängsrichtung üblicherweise mit der X-Richtung identifiziert, während die γ-Richtung zur Fahrzeugquerrichtung korrespondiert. Die Fahrzeughochachsenrichtung wird schließlich als Z-Richtung identifiziert. Jedenfalls lässt sich die Haube in ihrer Längsrichtung bzw. in der X-Richtung oder Fahrzeuglängsrichtung von dem Bediener bewegen.

Zu diesem Zweck ist die Haube mit Hilfe zumindest eines Scharniers an die Kraftfahrzeugkarosserie drehbar angelenkt. Das Scharnier lässt dabei eine Bewegung der Haube in der fraglichen Längsrichtung zu, und zwar üblicherweise gegen Federkraft. Die Kraft der an dieser Stelle realisierten zumindest einen Feder sorgt also dafür, dass die Haube gegen die Kraft der Feder in der Längsrichtung zwar ziehend oder drückend verlagert werden kann, bei einem Wegfall der Kraftbeaufschlagung jedoch in ihre Ausgangsstellung zurückkehrt.

Im Detail mag hierzu das Scharnier über zumindest zwei Gelenkhebel an die Kraftfahrzeugkarosserie angeschlossen sein. Dabei ist meistens wenigstens einer der beiden Gelenkhebel mit einem gegen die Kraft der zuvor bereits angesprochenen Feder verstellbaren Anlenkpunkt ausgerüstet. Der Anlenkpunkt lässt sich gegebenenfalls festsetzen und lösen. Das kann mit Hilfe der Handhabe im Innern des Kraftfahrzeuges bzw. der Kraftfahrzeugkarosserie als Bestandteil der Entriegelungs-/Öffnungseinrichtung erfolgen. In diesem Zusammenhang ist der Anlenkpunkt im Wesentlichen in der Längsrichtung der Haube bzw. in der Fahrzeuglängsrichtung verstellbar ausgebildet.

Auf diese Weise kann die Handhabe bei ihrer ersten Betätigung die Sperrklinke beaufschlagen, so dass das Gesperre die Vorraststellung einnimmt. Bei ihrer zweiten Betätigung kann dann die Handhabe den gegen die Kraft der Feder verstellbaren Anlenkpunkt freigeben. D. h., erst im Anschluss an die zweite Betätigung der Handhabe lässt sich die Haube bzw. Fronthaube durch die seitens des Bedieners eingeleitete Bewegung in ihrer Längsrichtung öffnen. Dadurch wird eine maximale Sicherheit erreicht, weil der verstellbare Anlenkpunkt des Scharniers für die Haube bzw. Fronthaube im Normalbetrieb festgelegt ist und folglich keine unbeabsichtigte Verstellung erfahren kann.

Es ist aber auch möglich, dass die Handhabe bei ihrer ersten und zweiten Betätigung die Sperrklinke beaufschlagt. So mag beispielsweise für den Fall vorgegangen werden, dass die Haube mit Hilfe von zwei örtlich voneinander beabstandeten Kraftfahrzeugtürschlössern gegenüber der Kraftfahrzeugkarosserie gesichert ist. In diesem Fall führt die erste Betätigung der Handhabe dazu, dass das erste Kraftfahrzeugtürschloss geöffnet wird. Die zweite Betätigung der Handhabe hat dann zur Folge, dass das hiervon unabhängige zweite Kraftfahrzeugtürschloss bzw. dessen Sperrklinke beaufschlagt wird. Als Folge hiervon ist das jeweilige Kraftfahrzeugtürschloss bzw. sind die beiden Kraftfahrzeugtürschlösser jeweils in ihrer Vorraststellung befindlich. Die Haube ist also nach wie vor gesichert und kann nicht beispielsweise durch Fahrtwind oder anderweitig unbeabsichtigt hochgeschwenkt werden.

In diesem Zusammenhang kann darüber hinaus die Auslegung so getroffen werden, dass die Sperrklinke selbst dann zumindest in die Vorrast der Drehfalle einfällt, wenn der die Haube schließende Bediener diese so langsam ablegt, dass im Stand der Technik bisher die Vorrast nicht erreicht wurde. Das ist möglich, weil die Haube im Rahmen der Erfindung in der Vorraststellung gleichsam in der Schwebe gegenüber der Kraftfahrzeugkarosserie gehalten werden kann. Die Auslegung einer die Haube in die Vorraststellung überführenden Feder kann also entsprechend gewählt werden.

Da die Drehfalle für den Übergang von der Vorraststellung in die geöffnete Position erfindungsgemäß praktisch nicht mit Federkraft beaufschlagt zu werden braucht, korrespondiert dies umgekehrt dazu, dass der Schließbolzen bzw. Schlosshalterbügel beim Schließen der Haube gleichsam kraftlos die Drehfalle zumindest in die Vorraststellung verschwenken kann, d. h. eine etwaige Gegenkraft einer Feder nicht überwunden werden muss. Hierzu korrespondiert ein weiterer und enormer Sicherheitsgewinn.

Im Ergebnis wird ein Kraftfahrzeugtürschloss zur Verfügung gestellt, welches einen besonders sicheren Betrieb bei konstruktiv einfachem Aufbau gewährleistet. Tatsächlich ist es beispielsweise nicht (mehr) möglich, dass ein Fahrzeugführer mit einer geöffneten Haube bzw. Fronthaube ohne Sicherung losfährt. Vielmehr wird die fragliche Haube bzw. Fronthaube erfindungsgemäß zumindest in der Vorraststellung des Gesperres gehalten. Ein bisher im Stand der Technik nicht ausschließbares unkontrolliertes Hochschwenken der Haube bzw. Fronthaube kann damit zuverlässig verhindert werden. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1 bis 3: ein Kraftfahrzeug im frontseitigen Bereich mit einer Fronthaube und dem erfindungsgemäßen Kraftfahrzeug-Fronthaubenschloss in verschiedenen Funktionsstellungen,
- Fig. 4: das Kraftfahrzeugtürschloss im Detail in geschlossenem Zustand und
- Fig. 5: den Gegenstand nach der Fig. 4 in Vorraststellung.

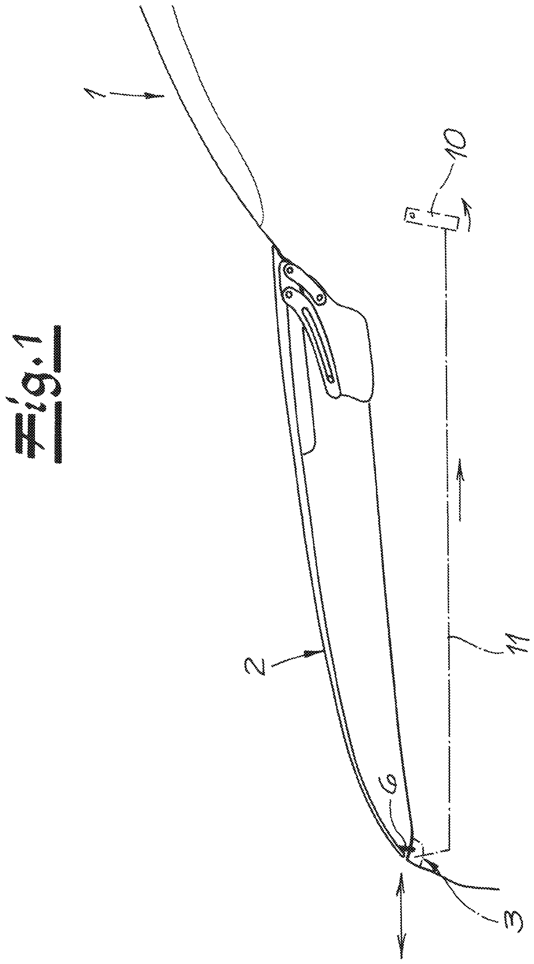

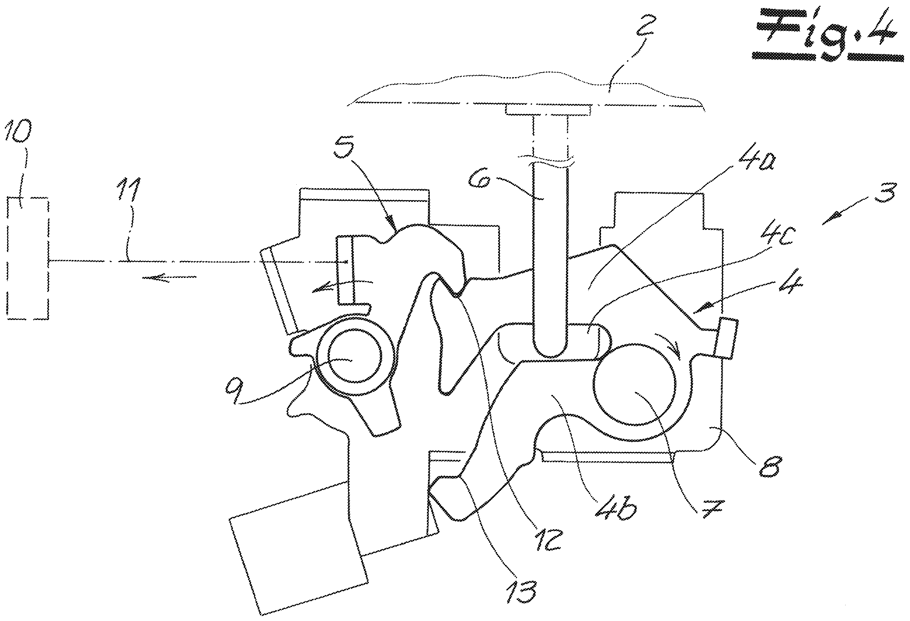

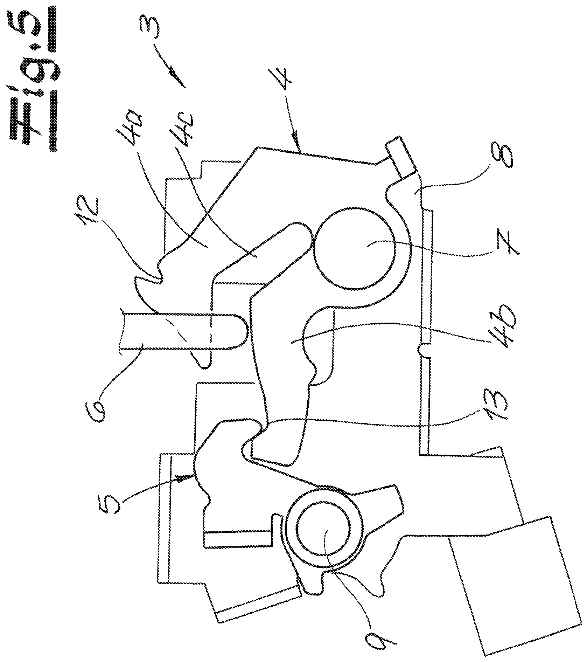

In den Fig. 1 bis 3 ist ein Kraftfahrzeug 1 dargestellt, von dem lediglich ein Frontbereich bzw. vorderer Bereich mit einer Fronthaube 2 zu erkennen ist. Die Fronthaube 2 wird gegenüber einer Kraftfahrzeugkarosserie mit Hilfe eines Kraftfahrzeugtürschlosses gesichert, bei dem es sich im Ausführungsbeispiel und nicht einschränkend um ein Kraftfahrzeug-Fronthaubenschloss 3 handelt. Das Innere bzw. Details dieses Kraftfahrzeugtürschlosses respektive des Kraftfahrzeug-Fronthaubenschlosses 3 im Beispielfall wird in den Fig. 4 und 5 in unterschiedlichen Funktionsstellungen wiedergegeben. Man erkennt anhand dieser Darstellungen, dass das fragliche Kraftfahrzeugtürschloss im Wesentlichen mit einem Gesperre 4, 5 aus einer Drehfalle 4 und einer Sperrklinke 5 ausgerüstet ist.

Das Gesperre 4, 5 wechselwirkt mit einem Schlosshalterbügel 6 bzw. einem Schließbolzen, welcher an der Haube bzw. Fronthaube 2 angeordnet ist. Die Drehfalle 4 ist drehbar um eine Achse 7 in einer Schlossplatte 8 gelagert. Vergleichbares gilt für die Sperrklinke 5, welche unter Definition einer Achse bzw. Drehachse 9 ebenfalls in der Schlossplatte 8 eine Lagerung erfährt. Die beiden Achsen 7, 9 von einerseits der Drehfalle 4 und andererseits der Sperrklinke 5 werden mit Hilfe zugehöriger Bolzen bzw. Stufendorne definiert, die jeweils an die Schlossplatte 8 angeschlossen sind.

Zum weiteren grundsätzlichen Aufbau gehört dann noch eine größtenteils in der Fig. 1 zu erkennende Entriegelungs-/Öffnungseinrichtung 10, 11 für die Haube 2. Die Entriegelungs-/Öffnungseinrichtung 10, 11 für die Haube 2 ist mit einer im Innern der Kraftfahrzeugkarosserie vorgesehenen Handhabe 10 ausgerüstet. Es können auch mehrere Handhaben vorgesehen sein. Die Handhabe 10 mag mechanisch oder elektrisch arbeiten. Im Ausführungsbeispiel ist eine mechanische Variante dargestellt.

In diesem Fall ist die Handhabe 10 über ein Verbindungsmittel 11, vorliegend einen Seilzug oder Bowdenzug, mechanisch mit dem Kraftfahrzeugtürschloss bzw. dem Kraftfahrzeug-Fronthaubenschloss 3 gekoppelt. Tatsächlich arbeitet das Verbindungsmittel 11 bzw. der an dieser Stelle vorgesehene Bowdenzug auf die Sperrklinke 5, wie dies in der Fig. 4 angedeutet ist. Eine Betätigung der Handhabe 10 korrespondiert nach dem Ausführungsbeispiel dazu, dass das Verbindungsmittel 11 bzw. der Bowdenzug ziehend beaufschlagt wird und folglich auch die endseitig an das Verbindungsmittel 11 angeschlossene Sperrklinke 5 eine ziehende Beaufschlag erfährt. Dadurch wird die Sperrklinke 5 im Ausführungsbeispiel im Gegenuhrzeigersinn um ihre Achse 9 verschwenkt, wie dies in der Fig. 4 angedeutet ist.

Ausgehend von der geschlossenen Stellung des Gesperres 4, 5 im Rahmen der Fig. 4 führt dies dazu, dass die Sperrklinke 5 von einer Hauptrast 12 der Drehfalle 4 abgehoben wird. Die Drehfalle 4 ist ihrerseits als Gabelfalle mit einem ersten Arm 4a und einem zweiten Arm 4b ausgebildet. Die beiden Arme 4a, 4b sind voneinander beabstandet und definieren zwischen sich einen Schlitz 4c, in welchem der Schlosshalterbügel 6 gefangen wird. Bei dem Arm 4a handelt es sich um einen Hauptrastarm 4a, während der Arm 4b als Vorrastarm 4b mit einer Vorrast 13 ausgelegt ist.

Sobald nun die Sperrklinke 5 in der geschlossenen Stellung nach der Fig. 4 von der Drehfalle 4 abgehoben wird, sorgt eine nicht ausdrücklich dargestellte Feder dafür, dass die Drehfalle 4 im Uhrzeigersinn um ihre Achse 7 verschwenkt wird. Da die Handhabe 10 nur einmalig betätigt wird und danach unmittelbar federunterstützt in ihre Ausgangsstellung zurückgeht, kann die Sperrklinke 5 nach der durch die Handhabe 10 bewegten Schwenkbewegung und Freigabe der Hauptrast 12 in die Vorrast 13 einfallen. Jetzt ist die Vorraststellung nach der Fig. 5 erreicht.

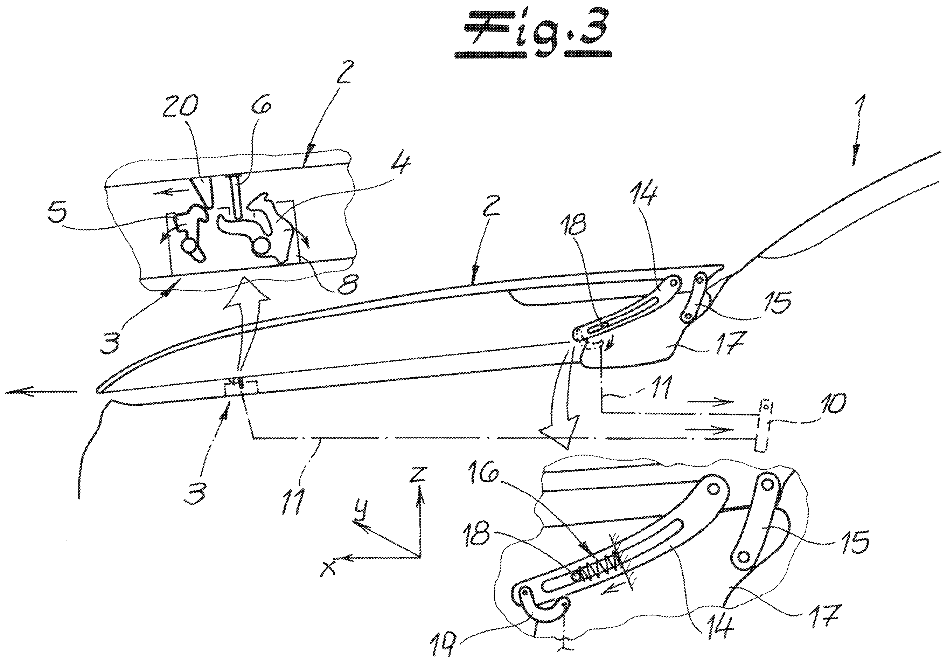

Zum Öffnen der Haube 2 aus der Vorraststellung entsprechend der Fig. 5 heraus wird die Haube 2 im Ausführungsbeispiel und erfindungsgemäß von einem Bediener oder Fahrzeugführer drückend oder ziehend beaufschlagt, und zwar in ihrer Längsrichtung, wie ein Doppelpfeil in der Fig. 1 angedeutet. D. h., nach der erstmaligen Beaufschlagung durch die Handhabe 10 befindet sich das Gesperre 4, 5 unverändert in seiner Vorraststellung. Der Schlosshalterbügel 6 wird nach wie vor von der Drehfalle 4 gefangen, weil diesbezüglich die Sperrklinke 5 in die Vorrast 13 eingefallen ist und folglich nicht nur den Schlosshalterbügel 6 sondern auch die angeschlossene Haube 2 sichert. Um die Haube 2 nun zu öffnen, wird die Haube 2 aus der Vorraststellung gemäß der Fig. 5 heraus in ihrer Längsrichtung bewegt. Die Längsrichtung ist zusätzlich in der Fig. 3 durch einen Pfeil in der X-Richtung dargestellt. Hierzu korrespondiert die Fahrzeuglängsrichtung. Demgegenüber bezeichnet die Y-Richtung die Fahrzeugquerrichtung. Ebenfalls eingezeichnet ist eine Z-Richtung bzw. Hochachsenrichtung.

Damit die Haube 2 die beschriebene Bewegung in der Fahrzeuglängs- X-Richtung vollführen kann, ist sie mittels zumindest eines Scharniers 14, 15, 16 an die Kraftfahrzeugkarosserie drehbar angelenkt. Das Scharnier 14, 15, 16 lässt eine Bewegung der Haube 2 in der Längsrichtung gegen die Kraft einer Feder 16 als Bestandteil des Scharniers 14, 15, 16 zu. Tatsächlich handelt es sich bei dem Scharnier 14, 15, 16 um ein federbeaufschlagtes Scharnier 14, 15, 16. Dieses verfügt im Detail über zwei Gelenkhebel 14, 15 und die bereits angesprochene Feder 16.

Die beiden Gelenkhebel 14, 15 sind jeweils endseitig einerseits an die Haube 2 und andererseits eine Anschlussplatte 17 und folglich an die Kraftfahrzeugkarosserie angeschlossen. Dabei ist zumindest ein Anlenkpunkt 18 des einen Gelenkhebels 14 verstellbar ausgelegt. Die Verstellung des Anlenkpunktes 18 korrespondiert dazu, dass die bereits angesprochene Feder 16 komprimiert wird. Als Folge hiervon lässt sich der eine Gelenkhebel 14 der beiden Gelenkhebel 14, 15 gegen die Kraft der betreffenden Feder 16 verstellen. Außerdem kann der fragliche Anlenkpunkt 18 festgesetzt und gelöst werden. Das ist insgesamt in der Fig. 3 dargestellt, wobei für die Festsetzung und das Lösen des Anlenkpunktes 18 eine schwenkbare Klinke 19 sorgen mag, die ihrerseits an das mit Hilfe der Handhabe 10 beaufschlagte Verbindungsmittel 11 oder ein weiteres Verbindungsmittel zur Handhabe 10 angeschlossen ist. Folgerichtig kann über die Handhabe 10 die Klinke 19 betätigt werden, so dass im Anschluss hieran der Anlenkpunkt 18 verfahren werden kann, beaufschlagt durch die Feder 16.

Der Anlenkpunkt 18 lässt sich im Wesentlichen in der Längsrichtung der Haube 2 verstellen. Dadurch sorgt eine vom Bediener initiierte Beaufschlagung der Haube 2 in der Längsrichtung bzw. X-Richtung dafür, dass der Anlenkpunkt 18 wandert, wie dies in der Fig. 3 angedeutet ist. Zugleich wird hierbei der andere zweite Gelenkhebel 15 verschwenkt. Als Folge hiervon kann die Haube 2 die Bewegung in ihre Längsrichtung vollführen, um insgesamt geöffnet zu werden.

Bei der Bewegung der Haube 2 in ihrer Längsrichtung bzw. in X-Richtung kommt eine Kontur 20 an der Haube 2 in Eingriff mit der Sperrklinke 5. Dazu sind im geschilderten Beispielfall zwei Kraftfahrzeugtürschlösser bzw. Kraftfahrzeug-Fronthaubenschlösser 3 jeweils links und rechts der Haube bzw. Fronthaube 2 platziert im Gegensatz zu der Darstellung nach der Fig. 1, wo lediglich ein zentral angeordnetes Kraftfahrzeug-Fronthaubenschloss 3 wiedergegeben ist. Jedenfalls sorgt die Kontur 20 innenseitig an der Haube 2 dafür, dass die Kontur 20 bei der beschriebenen Längsbewegung der Haube 2 in der X-Richtung gegen die Sperrklinke 5 des Gesperres 4, 5 fährt. Da sich das Gesperre 4, 5 hierbei in der Vorraststellung nach der Fig. 5 befindet, führt die Bewegung der Haube 2 unmittelbar dazu, dass das Gesperre 4, 5 geöffnet wird. Denn die Sperrklinke 5 wird von der Vorrast 13 an der Drehfalle 4 abgehoben.

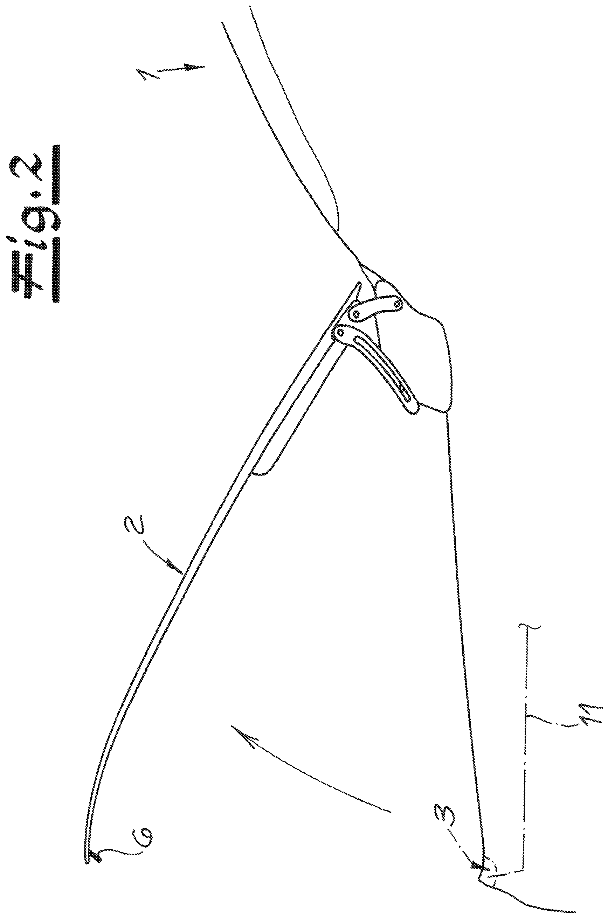

Jetzt ist der Schlosshalterbügel 6 komplett von dem Gesperre 4, 5 frei und kann die Haube 2 im Anschluss hieran geöffnet werden, wie dies in der Fig. 2 dargestellt ist. Dabei wird insgesamt so vorgegangen, dass die Handhabe 10 im Innern der Kraftfahrzeugkarosserie bei ihrer ersten Betätigung die Sperrklinke 5 des ersten Kraftfahrzeug-Fronthaubenschlosses 3 und bei ihrer zweiten Betätigung die Sperrklinke 5 des zweiten Fronthaubenschlosses 3 beaufschlagt. Als Folge hiervon befinden sich nach der zweimaligen Betätigung der Handhabe beide Kraftfahrzeug-Fronthaubenschlösser 3 in ihrer Vorraststellung. Sobald nun die Fronthaube 2 in der Längsrichtung bzw. X-Richtung bewegt wird, wird die Sperrklinke 5 jeweils mit Hilfe der Fronthaube 2 von der Drehfalle 4 abgehoben und kann folglich die Haube 2 geöffnet werden.

Es ist aber auch möglich, dass beispielsweise bei einem zentralen Kraftfahrzeug-Fronthaubenschloss 3 durch die erste Betätigung der Handhabe 10 das Gesperre 4, 5 in die Vorraststellung nach der Fig. 5 überführt wird. Die zweite Betätigung der Handhabe 10 mag dann dafür sorgen, dass der Anlenkpunkt 18 von der Klinke 19 freikommt. Demgegenüber ist bei der zuerst geschilderten Variante der Anlenkpunkt 18 generell in Längsrichtung der Haube 2 frei verstellbar und die Klinke 19 überhaupt nicht vorgesehen. Jedenfalls sorgt die zweite Betätigung der Handhabe 10 bei dieser Variante dafür, dass der Anlenkpunkt 18 freigegeben wird. Dadurch kann im Anschluss die Haube 2 von dem Bediener in ihrer Längsrichtung bzw. in der X-Richtung beaufschlagt werden, so dass wiederum die Kontur 20 an der Haube 2 die Sperrklinke 5 von der Drehfalle 4 abhebt. In beiden Fällen verlässt die Sperrklinke 5 die Vorrast 13, so dass der Schlosshalterbügel 6 komplett freikommt. Die Haube 2 kann geöffnet werden.

## Patentansprüche

1. Kraftfahrzeugtürschloss, insbesondere Kraftfahrzeug-Fronthaubenschloss (3), mit einem Gesperre (4, 5) aus im Wesentlichen Drehfalle (4) und Sperrklinke (5), wobei die Drehfalle (4) eine Vorrast (13) und eine Hauptrast (12) aufweist und wobei in einer Vorraststellung die Sperrklinke (3) in die Vorrast (13) der Drehfalle (4) eingefallen ist, wobei das Gesperre (4, 5) mit einem Schlosshalterbügel (6) an einer Haube (2) wechselwirkt, und mit einer Entriegelungs-/Öffnungseinrichtung (10, 11) für die Haube (2), welche mit einer im Innern einer Kraftfahrzeugkarosserie vorgesehenen Handhabe (10) ausgerüstet ist, wobei vorzugsweise eine zweimalige Betätigung der Handhabe (10) zum Öffnen der Haube (2) erforderlich ist, wobei das Gesperre (4, 5) nach zumindest einmaliger Betätigung der Handhabe (10) die Vorraststellung mit nach wie vor gefangenem Schlosshalterbügel (6) einnimmt, **dadurch gekennzeichnet, dass** die Haube (2) aus der Vorraststellung heraus durch eine Bewegung in ihrer Längsrichtung geöffnet wird, die dazu korrespondiert, dass die Sperrklinke (5) von einer Vorrast (13) an der Drehfalle (4) mit Hilfe einer Kontur (20) an der Haube (2) abgehoben wird.

2. Kraftfahrzeugtürschloss nach Anspruch 1, **dadurch gekennzeichnet, dass** die Haube (2) zum Öffnen aus der Vorraststellung heraus von einem Bediener drückend oder ziehend in Längsrichtung beaufschlagt wird.

3. Kraftfahrzeugtürschloss nach Anspruch 1 oder 2, **dadurch gekennzeichnet, dass** die Bewegung der Haube (2) in ihrer Längsrichtung zu einer Bewegung in Fahrzeuglängs- bzw. X-Richtung korrespondiert.

4. Kraftfahrzeugtürschloss nach einem der Ansprüche 1 bis 3, **dadurch gekennzeichnet, dass** die Handhabe (10) bei ihrer ersten und zweiten Betätigung die Sperrklinke bzw. die Sperrklinken (5) beaufschlagt, so dass das jeweilige Gesperre (4, 5) die Vorraststellung einnimmt.

5. Kraftfahrzeug mit einem Kraftfahrzeugtürschloss nach einem der Ansprüche 1 bis 4, mit einer Haube (2), einer Kraftfahrzeugkarosserie und mit zumindest einem Scharniers (14, 15, 16) **dadurch gekennzeichnet, dass** die Haube (2) mittels des zumindest einen Scharniers (14, 15, 16) an die Kraftfahrzeugkarosserie drehbar angelenkt ist, wobei das Scharnier (14, 15, 16) eine Bewegung der Haube (2) in Längsrichtung gegen Federkraft zulässt.

6. Kraftfahrzeug nach Anspruch 5, **dadurch gekennzeichnet, dass** das Scharnier (14, 15, 16) über zumindest zwei Gelenkhebel (14, 15) an die Kraftfahrzeugkarosserie angeschlossen ist.

7. Kraftfahrzeug nach Anspruch 6, **dadurch gekennzeichnet, dass** wenigstens einer der beiden Gelenkhebel (14, 15) mit einem gegen die Kraft einer Feder (16) verstellbaren sowie gegebenenfalls festsetzbaren und lösbaren Anlenkpunkt (18) ausgerüstet ist.

8. Kraftfahrzeug nach Anspruch 7, **dadurch gekennzeichnet, dass** der Anlenkpunkt (18) im Wesentlichen in der Längsrichtung der Haube (2) verstellbar ausgebildet ist.

9. Kraftfahrzeug nach einem der Ansprüche 7 bis 8, **dadurch gekennzeichnet, dass** die Handhabe (10) bei ihrer ersten Betätigung die Sperrklinke (5) beaufschlagt, so dass das Gesperre (4, 5) die Vorraststellung einnimmt und bei ihrer zweiten Betätigung den gegen die Kraft der Feder (16) verstellbaren Anlenkpunkt (18) freigibt.

## Claims

1. Motor vehicle door latch, in particular a motor vehicle front hood latch (3), comprising a locking mechanism (4, 5) consisting substantially of a catch (4) and a pawl (5), the catch (4) having a pre-ratchet (13) and a main ratchet (12) and the pawl (3) being engaged in the pre-ratchet (13) of the catch (4) in a pre-ratchet position, the locking mechanism (4, 5) interacting with a latch holder shackle (6) on a hood (2), said motor vehicle door latch also comprising an unlocking/opening device (10, 11) for the hood (2), which device is equipped with a handle (10) provided in the interior of a motor vehicle body, it preferably being necessary to operate the handle (10) twice in order to open the hood (2), and the locking mechanism (4, 5) assuming the pre-ratchet position, with the latch holder shackle (6) remaining captured, after the handle (10) has been operated at least once, **characterized in that** the hood (2) is opened out of the pre-ratchet position by a movement in the longitudinal direction thereof, which corresponds to the pawl (5) being lifted from a pre-ratchet (13) on the catch (4) with the aid of a contour (20) on the hood (2).

2. Motor vehicle door latch according to claim 1, **characterized in that**, in order to be opened from the pre-ratchet position, the hood (2) is acted upon by an operator pushing or pulling in the longitudinal direction.

3. Motor vehicle door latch according to either claim 1 or claim 2, **characterized in that** the movement of the hood (2) in the longitudinal direction thereof corresponds to a movement in the vehicle longitudinal direction or the X direction.

4. Motor vehicle door latch according to any of claims 1 to 3, **characterized in that** the first and second time the handle (10) is operated, said handle acts on the pawl or pawls (5) so that the respective locking mechanisms (4, 5) assume the pre-ratchet position.

5. Motor vehicle comprising a motor vehicle door latch according to any of claims 1 to 4, comprising a hood (2), a motor vehicle body, and at least one hinge (14, 15, 16), **characterized in that** the hood (2) is rotatably articulated to the motor vehicle body by means of the at least one hinge (14, 15, 16), the hinge (14, 15, 16) allowing the hood (2) to move in the longitudinal direction counter to spring force.

6. Motor vehicle according to claim 5, **characterized in that** the hinge (14, 15, 16) is connected to the motor vehicle body via at least two articulated levers (14, 15).

7. Motor vehicle according to claim 6, **characterized in that** at least one of the two articulated levers (14, 15) is equipped with an articulation point (18) which can be adjusted counter to the force of a spring (16) and can optionally be fixed and released.

8. Motor vehicle according to claim 7, **characterized in that** the articulation point (18) is designed to be adjustable substantially in the longitudinal direction of the hood (2).

9. Motor vehicle according to either claim 7 or claim 8, **characterized in that** the first time the handle (10) is operated, said handle acts on the pawl (5) so that the locking mechanism (4, 5) assumes the pre-ratchet position, and the second time said handle is operated, said handle releases the articulation point (18) that is adjustable counter to the force of the spring (16).

## Revendications

1. Serrure de portière de véhicule automobile, en particulier serrure de capot avant de véhicule automobile (3), comportant un dispositif d'encliquetage (4, 5) composé essentiellement d'un pêne pivotant (4) et d'un cliquet (5), le pêne pivotant (4) présentant un moyen de pré-verrouillage (13) et un moyen de verrouillage principal (12) et, dans une position de pré-verrouillage, le cliquet (3) étant inséré dans le moyen de pré-verrouillage (13) du pêne pivotant (4), le dispositif d'encliquetage (4, 5) interagissant avec un étrier de retenue de serrure (6) sur un capot (2), et comportant un dispositif de déverrouillage/d'ouverture (10, 11) destiné au capot (2) et pourvu d'une poignée (10) agencée à l'intérieur d'une carrosserie de véhicule automobile, un actionnement de préférence double de la poignée (10) étant nécessaire pour ouvrir le capot (2), le dispositif d'encliquetage (4, 5) adoptant, après au moins un actionnement de la poignée (10), la position de pré-verrouillage avec l'étrier de retenue de serrure (6) toujours coincé, **caractérisée en ce que** le capot (2) s'ouvre depuis la position de pré-verrouillage en se déplaçant dans sa direction longitudinale, ce qui correspond au fait que le cliquet (5) est soulevé d'un moyen de pré-verrouillage (13) sur le pêne pivotant (4) à l'aide d'un contour (20) sur le capot (2).

2. Serrure de portière de véhicule automobile selon la revendication 1, **caractérisée en ce qu'**un opérateur poussant ou tirant dans la direction longitudinale agit sur le capot (2) pour ouvrir celui-ci depuis la position de pré-verrouillage.

3. Serrure de portière de véhicule automobile selon la revendication 1 ou 2, **caractérisée en ce que** le mouvement du capot (2) dans sa direction longitudinale correspond à un mouvement dans la direction longitudinale ou X du véhicule.

4. Serrure de portière de véhicule automobile selon l'une des revendications 1 à 3, **caractérisée en ce que** la poignée (10) agit sur le ou les cliquets (5) lors de son premier et de son second actionnement, de sorte que le dispositif d'encliquetage respectif (4, 5) adopte la position de pré-verrouillage.

5. Véhicule automobile comportant une serrure de portière de véhicule automobile selon l'une des revendications 1 à 4, comportant un capot (2), une carrosserie de véhicule automobile et au moins une charnière (14, 15, 16), **caractérisé en ce que** le capot (2) est articulé en rotation avec la carrosserie de véhicule automobile au moyen de l'au moins une charnière (14, 15, 16), la charnière (14, 15, 16) permettant un mouvement du capot (2) dans la direction longitudinale à l'encontre la force de ressort.

6. Véhicule automobile selon la revendication 5, **caractérisé en ce que** la charnière (14, 15, 16) est raccordée à la carrosserie de véhicule automobile par l'intermédiaire d'au moins deux leviers articulés (14, 15).

7. Véhicule automobile selon la revendication 6, **caractérisé en ce qu'**au moins l'un des deux leviers articulés (14, 15) est pourvu d'un point d'articulation (18) réglable à l'encontre la force d'un ressort (16) et, éventuellement, fixable et amovible.

8. Véhicule automobile selon la revendication 7, **caractérisé en ce que** le point d'articulation (18) est conçu pour être réglable sensiblement dans la direction longitudinale du capot (2).

9. Véhicule automobile selon l'une des revendications 7 à 8, **caractérisé en ce que** la poignée (10) agit sur le cliquet (5) lors de son premier actionnement, de sorte que le dispositif d'encliquetage (4, 5) adopte la position de pré-verrouillage et **en ce qu'**elle libère, lors de son second actionnement, le point d'articulation (18) réglable à l'encontre de la force du ressort (16).
